# EUROPEAN PATENT APPLICATION

(11) **EP 3 061 728 A1**
(43) Date of publication of application: **31.08.2016**
(21) Application number: 14855412.4
(22) Date of filing: 24.10.2014
(51) Int. Cl.: C01F 11/18

(54) **NEEDLE-LIKE STRONTIUM CARBONATE FINE POWDER AND METHOD FOR PRODUCING SAME**

(30) Priority: 25.10.2013 JP 2013222087; 31.03.2014 JP 2014071199
(71) Applicant: Ube Material Industries, Ltd., Ube-shi Yamaguchi 755-8510 (JP)
(72) Inventor: HIMOTO, Takeshi, Ube-shi Yamaguchi 755-8510 (JP); NOGITA, Rika, Ube-shi Yamaguchi 755-8510 (JP); FUKUDA, Koichi, Ube-shi Yamaguchi 755-8510 (JP); OKADA, Fumio, Ube-shi Yamaguchi 755-8510 (JP); MATSUNAGA, Taizo, Ube-shi Yamaguchi 755-8510 (JP)
(74) Representative: Beckmann, Claus
(86) International application number: PCT/JP2014/078387
(87) International publication number: WO 2015/060438

(57) **Abstract**

A fine needle-like strontium carbonate powder comprising needle-like strontium carbonate particles which have an average major axis length of 150 nm or less, an average aspect ratio of 1.5 or more, and containing needle-like particles having a major axis length of 200 nm or more of 5% or less in terms of the number of particles, in which surfaces of the needle-like strontium carbonate particles are treated with (A) a polycarboxylic acid having a side chain of polyoxyalkyl-ene group or its anhydride and (B) a compound having a hydrophilic group and a hydrophobic group and further having a group capable of forming an anion in water has excellent dispersibility in a hydrophobic organic solvent or a polymeric resin solution prepared by dissolving a polymeric resin in a hydrophobic organic solvent.

## Description

### FIELD OF THE INVENTION

The present invention relates to a fine acicular strontium carbonate powder and a method for producing the same.

### BACKGROUND OF THE INVENTION

It is well known that a polymer resin product molded by applying a pressure in a certain direction shows birefringence. For instance, an optical film prepared by extending a cast film as well as a molded polymer resin product prepared for optical use such as an optical lens generally show birefringence.

Patent publication 1 (JP 2004-35347 A) describes a method for reducing the birefringence observed in molded polymer resin products which comprises dispersing acicular strontium carbonate particles in the polymer resin whereby the birefringence caused by orientation of polymer chains is offset by the birefringence caused by the acicular strontium carbonate particles dispersed in the polymer resin. It is noted that the method comprising dispersing solid particles such as acicular strontium carbonate particles in the polymer resin may reduce transparency of the molded products. For keeping the appropriate transparency of these molded polymer resin products, Patent publication 1 describes that it is advantageous to employ acicular strontium carbonate particles having an average length of 500 nm or less, particularly 200 nm or less for essentially maintaining appropriate transparency of the polymer resin product.

It is noted that the working example given in Patent publication 1 discloses a process for producing a film containing acicular strontium carbonate particles dispersed therein, which comprises the steps of dispersing acicular strontium carbonate particles (average particle size: 400 nm) in tetrahydrofuran; dissolving a polymer resin (ARTON, registered trade mark, available from JSR Co., Ltd.) in the resulting tetrahydrofuran dispersion to give a polymer resin-containing dispersion; spreading the polymer resin-containing dispersion on a glass plate; evaporating the solvent from the spread polymer resin solution to give a film; and finally extending the resulting film.

In the above-described process for the production of a polymer resin film containing acicular strontium carbonate particles dispersed therein, it is required to disperse uniformly the acicular strontium carbonate particles in the polymer resin solution. The molded polymer resin product for optical use can be made of a variety of polymer resins such as polyolefin, polyester, polycarbonate, or polymethyl methacrylate. The solvent used for dissolving these polymers generally is a hydrophobic organic solvent such as methylene chloride or cyclohexane. It is known that the fine strontium carbonate particles easily aggregate due to van der Waals force. Therefore, it is extremely difficult to uniformly disperse very fine small acicular strontium carbonate particles in a hydrophobic organic solvent.

Patent publication 2 (JP 2008-101051 A) describes a method for dispersing fine carbonate particles in a hydrophobic solvent or a polymer resin solution prepared by dissolving a polymer resin in a hydrophobic solvent, which comprises a step of treating surfaces of the fine carbonate particles with a surface-treating agent (e.g., stearic acid) under wet conditions and a step of treating surfaces of the particles in the presence of a dispersing agent (e.g., phosphate dispersant) by means of a disperser. In the working examples, a dispersion of fine calcium carbonate particles having an average projected circle-conversion area of approx. 80 nm is prepared by placing the fine calcium carbonate particles in an ethanol solution containing a dissolved surface-treating agent and subjected to dispersing processing, and then further subjecting the resulting dispersion to supplemental dispersing processing after addition of a dispersing agent. The finally obtained dispersion is then mixed with a solution of a polymer resin in methylene chloride (dicloromethane). Apparently, the disclosed method for dispersing fine carbonate particles in a polymer resin solution comprises a step of once dispersing the fine carbonate particles in a hydrophilic solvent such as ethanol.

Patent publication 3 (WO 2012/111692) describes a method for dispersing a fine strontium carbonate powder directly in a hydrophobic organic solvent, in which the fine strontium carbonate particles are previously treated on their surfaces with a surface active agent having a hydrophilic group and a hydrophobic group and further a group forming an anion in water. In wording examples given in this publication, polyoxyalkylenealkylether carboxylic acid is employed as the surface active agent. The publication describes that a powder comprising the fine strontium carbonate particles which are treated with the surface active agent shows excellent dispersibility in methylene chloride.

Patent publication 4 (JP 2008-222496 A) describes a strontium carbonate powder which shows excellent dispersiblity in an aqueous solvent. The strontium carbonate powder is previously treated on its surface with a polycarboxylic acid or its anhydride which has a side chain of polyoxyalkylene group.

Patent publication 5 (JP 2010-254533 A) describes a method of producing a powder of stick-like strontium carbonate particles which comprises heating (or aging) an aqueous slurry of needle-like strontium carbonate particles to a temperature of 50°C or higher. In the publication 5, it is described that strontium hydroxide and carbon dioxide are reacted in the presence of a crystal growth-restraining agent such as a carboxylic acid or a carbonate and aging the resulting aqueous slurry at a temperature of 50°C or higher. If desired, thus produced stick-like strontium carbonate particles can be pulverized by means of an air stream pulverizer such as jet mill.

In working examples of Patent publication 5, there are described a number of stick-like strontium carbonate powders and characteristics of these powders. In Example 1, the crystal growth-restraining agent is citric acid, the aging temperature is 70°C, and the resulting stick-like strontium carbonate powder has a longer diameter of 131 nm and an aspect ratio of 3.1. In Example 2, the crystal-growth reducing agent is citric acid, the aging temperature is 150°C, and the resulting stick-like strontium carbonate powder has a longer diameter of 131 nm and an aspect ratio of 2.4. In Example 3, the crystal growth-restraining agent is citric acid, the aging temperature is 70°C, pulverization by means of a jet mil is performed, and the resulting stick-like strontium carbonate powder has a longer diameter of 82 nm and an aspect ratio of 1.8.

### SUMMARY OF THE INVENTION

As described above, it is known that fine acicular (or needle-like) strontium carbonate particles used in a molded polymer resin product for reducing the birefringence observed on the molded polymer resin product are required to have an average longer diameter of 500 nm or less, preferably 200 nm or less.

As a result of studies made by the inventors of the present application, it has been found that the extremely fine acicular strontium carbonate particles having a longer diameter of 200 nm or less easily aggregate in a hydrophobic organic solvent so that it is difficult to disperse these fine particles uniformly in a hydrophobic organic solvent.

Accordingly, it is an object of the invention to provide a fine acicular (or needle-like) strontium carbonate particles which are well dispersible in a polymer resin solution which comprises a polymer resin dissolved in a hydrophobic organic solvent.

While the stick-like strontium carbonate particles described in Patent publication 5 are high in their aspect ratios, those described in Examples 1 and 2, their longer diameter (length) is large such as larger than 100 nm.

It is noted that these large particles having a longer diameter exceeding 100 nm may cause unfavorable effects such as increase of haze and hence may be incorporated only in a small amount so that enough adjustment of the birefringence may not be expected. Further, Patent publication 5 indicates to cut the long particles at their weak sites by pulverization to obtain particles having shorter lengths. The pulverization may cause decrease of the aspect ratio. Further, the pulverization may increase content of undesirable impurities, enlarge the particle size distribution, and bring about increase of the production cost due to necessity of the additional step.

Accordingly, it is another object of the invention to provide acicular strontium carbonate fine particles and a method of production of the same.

The present inventors have found that a fine acicular strontium carbonate powder containing essentially no acicular particles having a longer diameter of 200 nm or more is prominently improved in its dispersibility in a hydrophobic organic solvent if the fine acicular powder is treated on its surface with a combination of (A) a polycarboxylic acid having a side chain of a polyoxyalkylene group or its anhydride and (B) a compound having a hydrophilic group and a hydrophobic group and further a group forming an anion in water. The invention disclosed herein has been made on the above-mentioned finding.

Accordingly, the invention resides in a fine acicular strontium carbonate powder comprising acicular strontium carbonate particles having an average longer diameter of 150 nm or less and an average aspect ratio of 1.5 or more, and containing 5% or less of acicular particles having a longer diameter of 200 nm or more in terms of number of particles, which is characterized in that surfaces of the acicular strontium carbonate particles are treated with polycarboxylic acid having a side chain of a polyoxyalkylene group or an anhydride thereof, which is named (A), and a compound having a hydrophilic group, a hydrophilic group and a group capable of forming an anion in water, which is named (B).

The invention further resides in a process for producing the fine acicular strontium carbonate powder of the invention, which comprises the steps of:
preparing an aqueous slurry in which acicular strontium carbonate particles having an average longer diameter of 150 nm or less and an average aspect ratio of 1.5 or more, and containing 5% or less of acicular particles having a longer diameter of 200 nm or more in terms of number of particles dispersed in an aqueous medium;
mixing the aqueous slurry with polycarboxylic acid having a side chain of a polyoxyalkylene group or an anhydride thereof, which is named (A), to give an aqueous slurry containing dispersed acicular strontium carbonate particles whose surface are treated with the polycarboxylic acid or anhydride thereof;
mixing the aqueous slurry containing dispersed acicular strontium carbonate particles whose surface are treated with the polycarboxylic acid or anhydride thereof with a compound having a hydrophilic group, a hydrophilic group and a group capable of forming an anion in water, which is named (B), to give an aqueous slurry containing dispersed acicular strontium carbonate particles which are additionally treated with the compound; and
drying the aqueous slurry containing dispersed additionally treated acicular strontium carbonate particles.

Preferred embodiments of the fine acicular strontium carbonate powder and process of its production are described below:
(1) The compound (B) is polyoxyalkylenealkylether carboxylic acid or a salt thereof.
(2) The average aspect ratio is not less than 2.0 and not more than 5.0.
(3) The average length of the longer diameter is 10 nm or more.
(4) The compound (B) to be mixed with the aqueous slurry is in an amount of 11 to 50 weight parts per 10 weight parts of the polycarboxylic acid or anhydride thereof named (A) which has been mixed with the aqueous slurry.

Furthermore, the invention resides in a fine acicular strontium carbonate powder comprising acicular strontium carbonate particles having an average longer diameter of 5 to 100 nm and an average aspect ratio of 2.0 or more, and containing 5% or less of acicular particles having a longer diameter of 150 nm or more in terms of number of particles, which is characterized in that surfaces of the acicular strontium carbonate particles are treated with polycarboxylic acid having a side chain of a polyoxyalkylene group or an anhydride thereof which is named (A) and a compound having a hydrophilic group, a hydrophilic group and a group capable of forming an anion in water which is named (B) or an amine having a polyoxyalkylene group and a hydrocarbyl group which is named (C).

The inventors have further found that the acicular particles having not exceedingly large length but an increased aspect ratio can be produced by employing the specific crystal growth-restraining agent and the specific aging conditions. This finding also provides the present invention.

Accordingly, the invention furthermore resides in a process for producing a fine strontium carbonate powder, which comprises:
a reaction step comprising reacting strontium hydroxide with carbon dioxide in the presence of a dicarboxylic acid having at least one hydroxyl group in a molecular thereof or an anhydride thereof, to prepare strontium carbonate particles, and
an aging step comprising heating the strontium carbonate particles prepared in the reaction step at a temperature in the range of 75 to 115°C.

### EFFECTS OF THE INVENTION

The fine acicular strontium carbonate powder of the invention contains only a small amount of acicular particles having a longer diameter of 200 nm or larger and good dispersibility in hydrophobic organic solvents such as methylene chloride and cyclohexane which are known as solvents of polymer resin. Therefore, the fine acicular strontium carbonate powder is favorably employable as a filler for incorporation into a polymer resin to be molded under application of a specifically oriented pressure for the purpose of offsetting the birefringence observed in the molded polymer resin product.

Accordingly, a molded polymer resin product in which the fine acicular strontium carbonate powder of the invention is dispersed therein is favorably employable for manufacturing optical equipments such as optical film and optical lens.

Further, the process of the invention can be favorably employed for producing in industry a fine acicular strontium carbonate powder showing improved dispersibility in a hydrophobic organic solvent.

Furthermore, the invention provides a fine acicular strontium carbonate powder having an appropriate length and a high aspect ratio and its preparation method.

### BRIEF DESCRIPTIONS OF THE DRAWINGS

Fig. 1 illustrates particle size distributions of the fine acicular strontium carbonate powders which were prepared in Example 1 and Comparison Example 1 and dispersed in methylene chloride.
Fig. 2 illustrates particle size distributions of the fine acicular strontium carbonate powders which were prepared in Example 1 and Comparison Example 1 and dispersed in cyclohexane.

### EMBODIMENTS FOR PERFORMING THE INVENTION

The first fine acicular strontium carbonate powder according to the invention contains acicular particles having a longer diameter (i.e., length) of 200 nm or larger in not more than 5%, preferably not more than 3%, more preferably not more than 1%, in terms of number of the particles. The average length of the longer diameter of the acicular particles generally is not more than 150 nm, preferably not more than 130 nm, more preferably not more than 100 nm, and generally is not less than 10 nm, preferably not less than 30 nm, more preferably not less than 50 nm. The average aspect ratio of the acicular particles is not less than 1.5, preferably not less than 2.0, more preferably not less than 2.2, and generally is not more than 5.0, preferably not more than 4.0.

The length of the longer diameter and aspect ratio of the acicular particles can be measured by observing microscopically the fine acicular strontium carbonate particles and analyzing the obtained microscopic image.

The first fine acicular strontium carbonate powder of the invention is treated on its surface with two compounds, that is, (A) a polycarboxylic acid having a side chain of a polyoxyalkylene group, or its anhydride and (B) a compound having a hydrophilic group and a hydrophobic group and further a group forming an anion in water. These two compounds placed on the surfaces of the acicular particles can be detected from an infrared absorption spectrum taken on the surfaces of the acicular particles by Fourier transform infrared spectroscopy (FT-IR).

The acicular strontium carbonate particles can be improved in their dispersibility in a hydrophobic organic solvent by applying to their surfaces a combination of the above-mentioned two compounds. The reason is assumed as follows.

When the acicular strontium carbonate particles are treated with (A) polycarboxylic acid having a side chain of a polyoxyalkylene group, or its anhydride and (B) compound having a hydrophilic group and a hydrophobic group and further a group forming an anion in water, the polycarboxylic acid, or its anhydride, that is the compound (A), is preferentially fixed onto the surfaces of the acicular strontium carbonate particles through the carboxylic acid, to form a layer coating the whole surface with the polycarboxylic acid or its anhydride. A portion of the compound (B) is fixed onto the surfaces of the particles in the areas free from the coating layer of the compound (A), through mainly the group forming an anion in water, and a remaining portion is connected chemically or physically with the polyoxyalkylene group of the polycarboxylic acid or its anhydride (A) through the hydrophilic group, so that the coating layer of the compound (B) is formed over the whole surface of the previously formed coating layer of the compound (A). Thus formed double coating layers produce steric hindrance to keep the adjoining acicular particles from contact with each other, and reduce aggregation of the acicular particles. Therefore, the resulting fine acicular strontium carbonate particles (dry powder) contain acicular particles being well separated from each other with relatively large space. Further, the outer coating layer of the compound (B) placed on the acicular strontium carbonate powder has hydrophobic groups exposed thereon which have a strong affinity for the hydrophobic organic solvent. For the reasons described above, when the fine acicular strontium carbonate powder of the invention is dispersed in a hydrophobic organic solvent, the solvent can easily enter the spaces formed between the fine acicular strontium carbonate particles. Accordingly, the fine acicular strontium carbonate powder of the invention shows good dispersibility in a hydrophobic organic solvent.

In the invention, the compound (A) preferably is an anhydride of a polycarboxylic acid having a side chain of a polyoxyalkylene group. Examples of the compound (A) are Mariarim AKM-0531, Mariarim AKM-1511-60, Mariarim KM-50A, Mariarim AKM-150A, and Mariarim SC-0505K, all of which are available from Nihon Oil & Fat Co., Ltd.

The compound (B), that is, a compound having a hydrophilic group and a hydrophobic group and further a group forming an anion in water preferably is a compound in which the hydrophobic group and the group forming an anion in water are connected with each other via the hydrophilic group. The hydrophilic group preferably is a polyoxyalkylene group comprises an oxyalkylene group having alkylene group having 1 to 4 carbon atoms. The hydrophobic group preferably is an alkyl group having 3 to 30 carbon atoms, phenyl group, or an alkylphenyl group having 7 to 30 carbon atoms. The group forming an anion is preferably selected from the group consisting of carboxylic group (-CO₂H), sulfate group (-OSO₃H) and phosphate group (-OPO₃H₂). The hydrogen atom of the acidic group may be replaced with an alkali metal such as sodium or potassium or ammonium.

The compound (B) preferably is a carboxylic acid of the following formula (I) or its salt:

R¹-(-O-L¹-)ₖ-O-CH₂-C(=O)-OM¹ (I)

In the formula (I), R¹ represents an alkyl group having 3 to 30 carbon atoms, phenyl group, or an alkylphenyl group having 7 to 30 carbon atoms; L¹ represents an alkylene group having 1 to 4 carbon atoms, M¹ represents hydrogen, an alkali metal or ammonium, and k is a number in the range of 2 to 10.

R¹ preferably is an alkyl group or an alkylphenyl group having 10 to 18 carbon atoms. L¹ preferably is an ethylenic group.

The fine acicular strontium carbonate powder according to the first invention, that is the first fine acicular strontium carbonate powder, can be produced, for example, by the process comprising the below described steps:
the step of preparing an aqueous slurry comprising acicular strontium carbonate particles dispersed in an aqueous medium, said acicular strontium carbonate particles having an average longer diameter of 150 nm or less and an average aspect ratio of 1.5 or more, and containing 5% or less of acicular particles having a longer diameter of 200 nm or more in terms of number of particles;
the step of mixing the aqueous slurry with (A) polycarboxylic acid having a side chain of a polyoxyalkylene group or its anhydride, to prepare an aqueous slurry containing acicular strontium carbonate particles treated with the polycarboxylic acid or its anhydride, namely compound (A), dispersed therein;
the step of mixing the aqueous slurry containing acicular strontium carbonate particles treated with the polycarboxylic acid or its anhydride with the compound (B) containing a hydrophilic group and a hydrophobic group and further a group forming an anion in water, to prepare an aqueous slurry containing acicular strontium carbonate particles doubly coated with the compounds (A) and (B) dispersed therein; and
the step of drying the aqueous slurry containing the doubly coated acicular strontium carbonate particles.

The aqueous slurry preferably contains the acicular strontium carbonate particles in an amount of 1 to 30 wt.%. The polycarboxylic acid or its anhydride, namely (A), to be mixed with the aqueous slurry is used generally in an amount of 1 to 30 weight parts, preferably 2 to 20 weight parts, per 100 weight parts of the acicular strontium carbonate particles contained in the aqueous slurry. The compound (B) is generally added to the aqueous slurry generally in an amount of 1 to 40 weight parts, preferably 3 to 30 weight parts, per 100 weight parts of the acicular strontium carbonate particles contained in the aqueous slurry. The compound (B) may be added to the aqueous slurry in the same amount as that of the polycarboxylic acid or its anhydride (A). However, the amount of the compound (B) preferably is more than that of the polycarboxylic acid or its anhydride (A). In more detail, the compound (B) is preferably added to the aqueous slurry in an amount of 11 to 50 weight parts, more preferably 15 to 40 weight parts, per 10 weight parts of the polycarboxilic acid or its anhydride (A). Each of the polycarboxylic acid or its anhydride (A) and compound (B) is added to the aqueous slurry under stirring. The addition of the compound (B) is preferably made after the polycarboxylic acid or its anhydride (A) is dissolved in the aqueous slurry.

The aqueous slurry containing the acicular strontium carbonate particles which are secondly treated with the compound (B) can be dried by the known drying procedures using dryers such as a spray dryer and a drum dryer.

The acicular strontium carbonate particles to be treated in the invention can be produced by heating fine spherical strontium carbonate particles having an average aspect ratio of 1.5 or less in water to a temperature of 60°C or higher, preferably 60 to 100°C, more preferably 70 to 100°C, whereby rendering particle growth. The spherical strontium carbonate particles have a BET specific surface area of preferably 20 to 180 m²/g, more preferably 40 to 180 m²/g, most preferably 60 to 180 m²/g. The spherical strontium carbonate particles are not necessary to be of true sphere, and may be oval, or corner-rounded cubic or rectangular.

The fine spherical strontium carbonate particles can be prepared by carbonizing strontium hydroxide by way of introducing gaseous carbon dioxide into an aqueous solution or dispersion of strontium hydroxide under stirring in the presence of an organic acid having at least one hydroxyl group and at least one carboxyl group and three these groups in total. The aqueous solution or dispersion of strontium hydroxide generally contains strontium hydroxide at a concentration of 1 to 20 wt.%, preferably 2 to 15 wt.%, more preferably 3 to 8 wt.%. The organic acid preferably has one or two carboxyl groups and 3 to 6 hydroxyl groups. Preferred examples of the organic acid are tartaric acid, malic acid and gluconic acid. The organic acid can be generally employed in an amount of 0.1 to 20 weight parts, preferably 1 to 10 weight parts, per 100 weight parts of the strontium hydroxide. Gaseous carbon dioxide can be generally supplied in an amount of 0.5 to 200 mL/min., preferably in an amount of 0.5 to 100 mL/min., per one gram of strontium hydroxide. It is noted that the method for preparing the fine spherical strontium carbonate particles is described in WO 2011/052680.

The second fine acicular strontium carbonate powder of the invention is characterized by having an average longer diameter of 5 to 100 nm and an average aspect ratio of 2.0 or more, and containing 5% or less of acicular particles having a longer diameter of 150 nm or more in terms of number of particles. The average longer diameter preferably is in the range of 10 to 80 nm, more preferably in the range of 20 to 70 nm. There are no specific limitations with respect to the length of shorter diameter of the fine acicular strontium carbonate powder. However, the length of shorter diameter preferably is in the range of 5 to 50 nm, more preferably in the range of 10 to 40 nm.

The average length of the longer diameter can be determined by visually observing or automatically image-processing a microscopic picture of the fine acicular strontium carbonate powder obtained by means of a scanning electronic microscope (SEM). The length of the longer diameter can be identified as length of the longer side enclosed with the corresponding rectangle, and the length of the shorter diameter can be identified as length of the shorter side of the rectangle. In more detail, the image of the acicular strontium carbonate particle is circumscribed with a rectangle, and the length of its longer side and the length of its shorter side are identified as the length of a longer diameter and the length of a shorter diameter, respectively. The average values are determined using a number of the acicular particles in which the number means the statistically reliable number (N). The number generally is 100 or more, preferably 300 or more, more preferably 500 or more.

The mean aspect ratio of the fine acicular strontium carbonate powder is 2.0 or more, but preferably 2.05 or more, more preferably 2.1 or more. There are no specific limitations with respect to the upper limit of the average aspect ratio, but generally 20 or less, preferably 10 or less, more preferably 5 or less. The aspect ratio means a ratio of length of longer diameter/length of shorter diameter. The average aspect ratio means an average value of the aspect ratios, and can be determined by averaging the aspect ratios determined on a plurality of the acicular particles, or by dividing the lengths of the longer diameter of plural acicular particles by the length of the shorter diameter thereof.

The fine acicular strontium carbonate powder may contain 5% or less, preferably 3% or less, more preferably 1% or less, of acicular particles having a longer diameter of 150 nm or more in terms of number of particles. The number of the fine acicular particles can be determined by visually observing or automatically image-processing a picture of the fine acicular powder obtained by means of a scanning electronic microscope (SEM).

There are no specific limitations with respect to a BET specific surface area of the fine acicular strontium carbonate powder. However, the fine acicular powder generally has a BET specific surface area of 50 to 150 m²/g, preferably 60 to 140 m²/g, more preferably 70 to 130 m²/g. It requires a longer period of time to produce a fine acicular powder having a BET specific surface area of less than 50 m²/g, while a fine acicular powder having a BET specific surface area of more than 150 m²/g may easily aggregate to reduce dispersibility and transparency.

### <Dicarboxylic acid having at least one hydroxyl group in its molecule or its anhydride>

The fine acicular strontium carbonate powder preferably has a dicarboxylic acid having at least one hydroxyl group in its molecule or its anhydride (hereinafter, simply referred to as "dicarboxylic acids") fixed onto the surface thereof. The presence of the dicarboxylic acids may restrain extraordinary growth of the acicular particle on the shorter side, to assist production of fine particles having a higher aspect ratio. The resulting fine acicular particles are easily oriented in the resinous polymer matrix in the procedure of producing an optical film, and easily control birefringence in the produced optical film. In addition, the resulting fine acicular strontium carbonate powder increases in its dispersibility in the resinous polymer matrix, whereby the transparency of the optical film may increase.

It should be noted that the presence of the dicarboxylic acids attached onto the surface of the acicular particle can be detected by obtaining an IR spectrum of the surface of the particle by means of Fourier transform infrared spectroscopy (FT-IR).

The dicarboxylic acids may function as a crystal growth-restraining agent if these are placed in the step of reaction between strontium hydroxide and carbon dioxide. Therefore, it can be said that the dicarboxylic acids can serve for restraining the crystal growth in the reaction step as well as for improving dispersibility of the resulting particles by way of fixation onto the particles.

Examples of the dicarboxylic acids include malic acid, tartronic acid, D-tartaric acid, L-tartaric acid, mesotartaric acid, DL-tartaric acid (racemic modification), and anhydrides of these acidic compounds. Most preferred is DL-tartaric acid.

### <Surface-treating agent>

The acicular strontium carbonate particle has on its surface two surface-treating agents (or surface-modifying agents), namely, the first surface-treating agent and the second surface treating agent, in combination. The first surface-treating agent is the compound A, that is, a polycarbolylic acid having a side chain of a polyoxyalkyene group or its anhydride. The second surface-treating agent is the compound B, namely, a compound having a hydrophilic group, a hydrophobic group and a group forming an anion in water, or the compound C, namely, an amine having a polyoxyalkylene group and a hydrophobic group. The presence of these surface-treating agents on the surface of the acicular particle can be detected by obtaining an IR spectrum of the surface of the particle by means of Fourier transform infrared spectroscopy (FT-IR).

The reason of improving the dispesibility of the fine acicular strontium carbonate powder by treating the surface of the acicular strontium carbonate particle with the two surface-treating agents is assumed as follows.

When the acicular strontium carbonate particle is treated with the first surface-treating agent and the second surface-treating agent, the first surface-treating agent is preferentially fixed on to the surface of the acicular particle through the carboxyl group to form a coating layer, and then the second surface-treating agent forms on the coating layer of the first surface-treating agent another coating layer. Thus, the acicular strontium carbonate particle is coated with double coating layers. The double coating layers contribute to increase steric hindrance of the particle and disturb contact of the adjoining acicular particles, whereby restraining aggregation of the acicular particles. Further, if the acicular strontium carbonate particles are coated with three-coating layers, these particles give a fine aciculate powder (dry powder) in which the adjoining particles are well separated from each other via increased spaces.

As for the second surface-treating agent is concerned, the hydrophobic group contained in the compound B as well as the hydrocarbyl group contained in the compound C both show high affinity for a hydrophobic organic solvent. When the fine acicular strontium carbonate powder of the invention in which the acicular particles are separately kept via increased spaces and have the hydrophobic group or hydrocarbyl group on the outer coating layer is placed in a hydrophobic organic solvent, the organic solvent easily enters the increased spaces formed between the adjoining particles. Therefore, the fine acicular strontium carbonate powder can be easily dispersed in the hydrophobic organic solvent with formation of substantially no aggregated particles.

### <First surface-treating agent>

The compound A, namely, the first surface-treating agent, can be the same as the formerly described polycarboxylic acid having a side chain of a polyoxyalkylene group or its anhydride, namely, compound (A).

### <Second surface-treating agent>

The second surface-treating agent B or C can be the compound (B) or compound (C) described hereinbefore for treating the first fine acicular strontium carbonate powder. Examples of the compound B include the commercially available Kaocera 8110 (available from Kao Corporation).

The compound C preferably has two polyoxyalkylene groups and one hydrocarbyl group both attached to the nitrogen atom. The polyoxyalkylene group preferably is a polyoxyethylene group. The hydrocarbyl group preferably has 12 to 18 carbon atoms. The hydrocarbyl group may contain a double bond or a triple bond. The compound C may be an amine-type surface active agent. The amine-type surface active agent preferably has HLB (Hydrophile-Lipophile Balance) in the range of 4 to 10. The HLB can be adjusted in consideration of the polarity of the organic solvent in which the fine acicular strontium carbonate powder is dispersed. For instance, a compound C having a HLB in the range of 4 to 6 can be preferably employed if the organic solvent has an extremely low polarity such as cyclohexane, while a compound C having a HLB in the range of 7 to 10 can be preferably employed if the organic solvent has a relatively high polarity such as methylene chloride. Examples of the compound C include Nymeen S-202 and Nymeen S-204, available from Nihon Oil-Fat Co., Ltd.

The process of producing a fine strontium carbonate powder is further described below.

The process of producing a fine strontium carbonate powder for the invention includes a reaction step comprising reacting strontium hydroxide with carbon dioxide in the presence of a dicarboxylic acid having at least one hydroxyl group in a molecular thereof or its anhydride, to prepare strontium carbonate particles, and an aging step comprising heating the strontium carbonate particles prepared in the reaction step at a temperature in the range of 75 to 115°C. If desired, a surface-treating step and a drying step can be performed after the aging step.

### (a) Reaction step

This step comprises introducing gaseous carbon dioxide into an aqueous solution or dispersion (hereinafter referred to as aqueous slurry) in the presence of a crystal growth-restraining agent, for carbonation of the strontium hydroxide, so as to prepare a spherical strontium carbonate having a low aspect ratio. There are no limitations with respect to the concentration of strontium hydroxide in the aqueous slurry, but strontium hydroxide is generally contained in an amount of 1 to 20 wt.%, preferably in an amount of 2 to 18 wt.%, more preferably in an amount of 3 to 15 wt.%.

The crystal growth-restraining agent preferably is an organic acid having two carboxyl groups and one or more hydroxyl groups so that the carboxyl groups and hydroxyl groups are present in the number of 3 to 6 in total. Examples of the crystal growth-restraining agents include tartaric acid, malic acid and tartronic acid.

The crystal growth-restraining agent may be an organic acid having two carboxyl groups and a hydroxyl group in which the groups are contained at least three in total. However, in order to control the crystal growth through deposition on the surface of the resulting particle and improve the dispersibility, the aforementioned dicarboxylic acid having a hydroxyl group and its anhydride is preferred. Most preferred is DL-tartaric acid. The crystal growth-restraining agent is generally employed in an amount of 0.1 to 20 weight parts, preferably in an amount of 1 to 10 weight parts, per 100 weight parts of strontium hydroxide.

The gaseous carbon dioxide is supplied generally at a flow rate of 0.5 to 200 mL/min., preferably 0.5 to 100 mL/min., per one gram of strontium hydroxide. This reaction step can give fine substantially spherical strontium carbonate particles having an average aspect ratio of less than 1.5. The method of producing spherical strontium carbonate particles are described in WO 2011/052680.

### (b) Aging step

The aging step is performed for converting the spherical strontium carbonate particles contained in the slurry and prepared in the reaction step into fine acicular strontium carbonate particles through grain growth by aging. The aging step can be carried out in warm water at a temperature of 75 to 115°C, preferably 80 to 110°C, more preferably 85 to 105°C. If the aging is carried out at a temperature of lower than 75°C, the growth of the spherical strontium carbonate particle is apt to decrease, resulting in the formation of strontium carbonate particle having a low aspect ratio, while the aging is carried out at a temperature of higher than 115°C, a strontium carbonate particle having a low aspect ratio due to increased growth on the shorter side. There is no specific limitation with respect to the aging period, but the aging is carried out generally for 1 to 100 hours, preferably 5 to 50 hours, more preferably 10 to 30 hours.

### (c) Surface treating step

The surface treating step is carried out by treating the surface of the fine acicular strontium carbonate particle obtained in the aging step with a dispersant, so as to improve the dispersibility. Known dispersants may be employed. The treatments with a first surface-treating agent and a second surface-treating agent may be carried out sequentially or simultaneously.

The surface treating step can be carried out by adding a dispersant to the aqueous slurry having been subjected to the aging step. The aqueous slurry preferably contains the strontium carbonate particles in an amount of 1 to 30 wt.%. The compound A is generally added to the aqueous slurry in an amount of 1 to 30 weight parts, preferably 2 to 20 weight parts, per 100 weight parts of the strontium carbonate particles in the slurry.

The first surface treating agent is generally added in an amount of 1 to 40 weight parts, preferably 3 to 30 weight parts, per 100 weight parts of the strontium carbonate particles in the slurry. Likewise, the second treating agent is generally added in an amount of 1 to 40 weight parts, preferably 3 to 30 weight parts, per 100 weight parts of the strontium carbonate particles in the slurry.

The first and second surface treating agents are preferably added to the aqueous slurry under stirring. The second surface treating agent is preferably added to the aqueous slurry after the first surface treating agent is dissolved in the slurry. However, the first and second surface treating agents may be added to the aqueous slurry simultaneously.

### (d) Drying step

The drying step is carried out for drying the aqueous slurry obtained in the (b) aging step and optionally after being subjected to the (c) surface treating step, to give a fine strontium carbonate powder. The drying step can be carried out by means of a known dryer such as a spray dryer or a drum dryer. The obtained dry strontium carbonate powder may be subjected to sieving for removing large particles. The sieve may have an aperture size of 75 µm.

### EXAMPLES

### [Example 1]

### (1) Preparation of acicular strontium carbonate particles-containing slurry

In 3L of pure water (temperature: 10°C) was placed 366 g of strontium hydroxide octahydrate (special grade reagent, purity: 96% or more), and these were mixed to prepare an aqueous slurry of strontium hydroxide (concentration: 5.6 wt.%). To the aqueous strontium hydroxide slurry was added 14.2 g (0.039 g per one gram of strontium hydroxide) of DL-tartaric acid (special grade reagent, purity: 99% or higher), and these were stirred to dissolve DL-tartaric acid in the slurry.

Subsequently, gaseous carbon dioxide was introduced into the aqueous slurry (kept to 10°C) under stirring at a flow rate of 0.5 L/min. (corresponding to 2.9 mL/min., per one gram of strontium hydroxide), until the aqueous slurry showed pH 7, whereby producing strontium carbonate particles. After further stirring for further 30 min., there was obtained an aqueous strontium carbonate particle-containing slurry.

Thus obtained strontium carbonate particle-containing slurry was heated to 95°C for 12 hours to grow the strontium carbonate particles to have an acicular form. Thereafter, the heated slurry was kept to stand at room temperature, resulting in an aqueous slurry containing the acicular strontium carbonate particles.

### (2) Surface treatment of acicular strontium carbonate particles

The aqueous acicular strontium carbonate particles-containing slurry was stirred in a homomixer (T.K. Homomixer Mark II, available from Primix Co., Ltd.) using a stirring paddle rotating at a circumferential speed of 7.85 m/sec. To the aqueous slurry was added under stirring was added 16.24 g (8 weight parts per 100 weight parts of strontium carbonate particles) of an anhydride of polycarboxylic acid having a side chain of a polyoxyalkylene group (Mariarim SC-0505K, available from Nihon Oil & Fat Co., Ltd.), and the stirring was continued until the polycarboxylic acid was dissolved in the aqueous slurry. Subsequently, 56.84 g (28 weight parts per 100 weight parts of strontium carbonate particles) of polyoxyethylenealkyl-ether carboxylic acid (Kaocera 8110, available from Kao Corporation) was added to the resulting slurry, and the stirring was further continued for one hour. The aqueous strontium carbonate particles-containing slurry was dried to give a fine strontium carbonate powder by spraying the slurry onto a stainless steel plate heated to 120-130°C. Thus obtained fine strontium carbonate powder was microscopically examined and confirmed to comprise acicular particles.

### (3) Measurements of particle size and BET specific surface area of fine acicular strontium carbonate powder

From the microscopic image, 1,000 particles of the fine acicular strontium carbonate powder were subjected to measurements of lengths of the longer diameter and aspect ratios, and their average values and a ratio of acicular particles having a longer diameter of 200 nm or more were determined. By these determinations, it was determined that an average length of longer diameter was 37 nm, an average aspect ratio was 2.3, acicular particles having a length of longer diameter of 200 nm or more were contained in a ratio of less than 0.1% (0/1,000) in terms of number of particles, and acicular particles having a length of longer diameter of 100 nm or more were contained in a ratio of less than 0.1% (0/1,000) in terms of number of particles. It was further confirmed that the fine acicular strontium carbonate powder had a BET specific surface area of 98.0 m²/g.

### (4) Evaluation of dispersibility of fine acicular strontium carbonate powder in organic solvents 1) Dispersibility in methylene chloride

0.2 g of the fine acicular strontium carbonate powder was placed in 20 g of methylene chloride, and dispersed for 5 minutes by means of a ultrasonic homogenizer to give a methylene chloride dispersion containing acicular strontium carbonate particles in an amount of 1 wt.%.

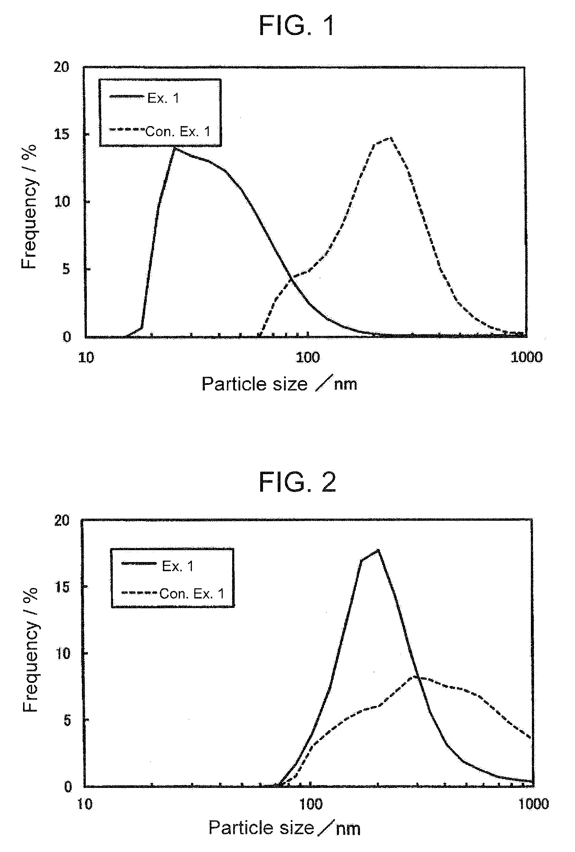

The methylene chloride dispersion was then subjected to measurement of particle size distribution by the dynamic light scattering method. The particle size distribution is graphically illustrated in Fig. 1. Further, D₅₀, D₉₀ and standard deviation are described in Table 1 below.

In addition, a light transmittance of the methylene chloride dispersion was measured by means of a spectro photometer. If large aggregated particles are produced, the light transmittance of the dispersion decreases. The transmittance measured at wavelengths of 400 nm, 500 nm, 600 nm, 700 nm and 800 nm are set forth in Table 1 below.

### 2) Dispersibility in cyclohexane

0.2 g of the fine acicular strontium carbonate powder was placed in 20 g of cyclohexane, and dispersed for 5 minutes by means of a ultrasonic homogenizer to give a cyclohexane dispersion containing acicular strontium carbonate particles in an amount of 1 wt.%.

The cyclohexane was then subjected to measurement of particle size distribution by the dynamic light scattering method. The particle size distribution is graphically illustrated in Fig. 2. Further, D₅₀, D₉₀ and standard deviation are described in Table 1 below.

In addition, a light transmittance of the cyclohexane dispersion was measured by means of a spectro photometer. If large aggregated particles are produced, the light transmittance of the dispersion decreases. The transmittance measured at wavelengths of 400 nm, 500 nm, 600 nm, 700 nm and 800 nm are set forth in Table 2 below.

### [Comparison Example 1]

The procedures of Example 1 were repeated except that the anhydride of polycarboxylic acid having a side chain of a polyoxyalkylene group was not added and that the amount of the polyoxyethylenealkylether carboxylic acid was changed into 48.72 g (24 weight parts per 100 weight parts of strontium carbonate particles) to produce a surface-treated fine acicular strontium carbonate powder.

The surface-treated fine acicular strontium carbonate powder was then subjected to evaluation of dispersibility in organic solvents in the manner described in Example 1. The results are set forth in Figs. 1 & 2, and Tables 1 & 2.

### [Comparison Example 2]

The procedures of Example 1 were repeated except that the polyoxyethylenealkylether carboxylic acid was not used and the anhydride of polycarboxylic acid having a side chain of a polyoxyalkylene group was only added in an amount of 16.2 g (8 weight parts per 100 weight parts of strontium carbonate particles) to produce a surface-treated fine acicular strontium carbonate powder.

The surface-treated fine acicular strontium carbonate powder was added to each of methylene chloride and cyclohexane for evaluation of dispersibility in these solvents. It was observed that the acicular strontium carbonate particles were precipitated in the solvents.

**Table 1 (solvent: methylene chloride)**

| | Particle size distribution | | | Light transmittance(%) | | | | |
|---|---|---|---|---|---|---|---|---|
| | D₅₀(nm) | D₉₀(nm) | Dev.(%) | 400 | 500 | 600 | 700 | 800 |
| Ex. 1 | 35.8 | 75.1 | 19.9 | 21.7 | 32.9 | 40.7 | 45.2 | 48.3 |
| Com.1 | 199.2 | 365.4 | 99.5 | 0.3 | 1.2 | 2.8 | 4.7 | 6.9 |

| | | | | | | | | |
|---|---|---|---|---|---|---|---|---|
| Dev.: Standard deviation | | | | | | | | |

**Table 2 (solvent: cyclohexane)**

| | Particle size distribution | | | Light transmittance(%) | | | | |
|---|---|---|---|---|---|---|---|---|
| | D₅₀(nm) | D₉₀(nm) | Dev.(%) | 400 | 500 | 600 | 700 | 800 |
| Ex. 1 | 185.2 | 355.2 | 82.0 | 23.2 | 35.4 | 43.0 | 48.4 | 52.7 |
| Com.1 | 358.7 | 1754.0 | 412.6 | 0.3 | 0.6 | 0.8 | 1.2 | 1.3 |

| | | | | | | | | |
|---|---|---|---|---|---|---|---|---|
| Dev.: Standard deviation | | | | | | | | |

From the results seen in Figs. 1 & 2, Tables 1 & 2, and Comparison Example 1, it is understood that the fine acicular strontium carbonate powder treated with a combination of a polycarboxylic acid (or anhydride) having a side chain of a polyoxyalkylene group and a compound having a hydrophilic group, a hydrophobic group, and a group forming an anion in water according to the invention forms an aggregated mass in methylene chloride and cyclohexane in a less amount, as compared with the same fine acicular strontium carbonate powder treated with only the compound having a hydrophilic group, a hydrophobic group, and a group forming an anion in water (Comparison Example 1) and the same fine acicular strontium carbonate powder treated with only the polycarboxylic acid (or anhydride) having a side chain of a polyoxyalkylene group (Comparison Example 2). Therefore, a fine acicular strontium carbonate powder of the invention is improved in its dispersibility in hydrophobic organic solvents.

### [Example 2]

### (1) Preparation of fine acicular strontium carbonate powder

### (a) Reaction step

In 3L of pure water (temperature: 10°C) was placed 366 g of strontium hydroxide octahydrate (special grade reagent, purity: 96% or more), and these were mixed to prepare an aqueous slurry of strontium hydroxide (concentration: 5.6 wt.%). To the aqueous strontium hydroxide slurry was added DL-tartaric acid (special grade reagent, purity: 99% or higher), and these were stirred to dissolve DL-tartaric acid in the slurry.

Subsequently, gaseous carbon dioxide was introduced into the aqueous slurry (kept to 10°C) under stirring at a flow rate of 0.5 L/min. (corresponding to 3.75 mL/min., per one gram of strontium hydroxide), until the aqueous slurry showed pH 7, whereby producing acicular strontium carbonate particles. After further stirring for further 30 minutes, there was obtained an aqueous acicular strontium carbonate particles-containing slurry.

### (b) Aging step

The resulting aqueous slurry containing acicular strontium carbonate particles was placed in a stainless steel tank and heated to 80 °C for 24 hours to cause growth of the acicular strontium carbonate particles. The aqueous slurry was then cooled by allowing to stand at room temperature, to give an aqueous slurry of acicular strontium carbonate particles.

### (c) Surface treating step - (d) Drying step

3500 g of the aqueous acicular strontium carbonate particles-containing slurry (concentration: 5.8 wt.%) was stirred in a homomixer (T.K. Homomixer Mark II, available from Primix Co., Ltd.) using a stirring paddle rotating at a circumferential speed of 7.85 m/sec. To the aqueous slurry was added under stirring was added 12.2 g (6 weight parts per 100 weight parts of strontium carbonate particles) of an anhydride of polycarboxylic acid having a side chain of a polyoxyalkylene group (Compound A: Mariarim KM-0521, available from Nihon Oil & Fat Co., Ltd.), and the stirring was continued until the polycarboxylic acid was dissolved in the aqueous slurry. Subsequently, 30.5 g (15 weight parts per 100 weight parts of strontium carbonate particles) of polyoxyethylene-steary amine (Nymeen S-204, HLB=8.0, available Nihon Oil & Fat Co., Ltd.) was added to the resulting slurry, and the stirring was further continued for one hour. The aqueous strontium carbonate particles-containing slurry was dried to give a fine strontium carbonate powder. Thus obtained fine strontium carbonate powder was microscopically examined and confirmed to comprise acicular particles.

### (2) Measurements of particle size and BET specific surface area of fine acicular strontium carbonate powder

From the microscopic image, 1,000 particles of the fine acicular strontium carbonate powder were subjected to measurements of lengths of the longer diameter and aspect ratios. By these determinations, it was determined that an average length of longer diameter was 64 nm, an average aspect ratio was 2.7, acicular particles having a length of longer diameter of 150 nm or more were contained in a ratio of 0.4% (4/1,000) in terms of number of particles. It was further confirmed that the fine acicular strontium carbonate powder had a BET specific surface area of 74.0 m²/g.

These results are set forth in Table 3.

Further, it was determined that a content of acicular particles having a length of a longer diameter in the range of 5 nm to 100 nm was 99.6%.

### (3) Surface analysis of fine acicular strontium carbonate powder

The surfaces of the acicular particles were analyzed by Fourier transform infrared spectroscopy (FT-IR) and single reflection ATR (diamond 45oC, resolution power: 4 cm⁻¹). There were detected an infrared peak assigned to the compound A and an infrared peak assigned to the compound C.

### [Example 3]

### (1) Preparation of fine acicular strontium carbonate powder

### (a) Reaction step - (b) Aging step

The procedures of Example 2 were repeated except that the flow speed of gaseous carbon dioxide was changed into 0.5 L/min. (2.9 mL/min. per one gram of strontium hydroxide) in the reaction step and that the aqueous acicular strontium carbonate particles-containing slurry was heated to 95°C for 12 hours in the aging step, to yield an aqueous slurry of acicular strontium carbonate particles.

### (c) Surface-treating step

The procedures of Example 2 were repeated except that Mariarim SC-0505K (available from Nihon Oil & Fat Co., Ltd.) was employed as Compound A in an amount of 16.24 g (8 weight parts per 100 weight parts of strontium carbonate partices) and the compound C (Nymeen S-204) was added in an amount of 46.69 g (23 weight parts per 100 weight parts of strontium carbonate particles), to treat the surfaces of the acicular strontium carbonate particles.

### (2) Measurements of particle size and BET specific surface area of fine acicular strontium carbonate powder

From the microscopic image, 1,000 particles of the fine acicular strontium carbonate powder were subjected to measurements of lengths of the longer diameter and aspect ratios. By these determinations, it was determined that an average length of longer diameter was 32 nm, an average aspect ratio was 2.3, acicular particles having a length of longer diameter of 150 nm or more were contained in a ratio of less than 0.1% (0/1,000) in terms of number of particles. It was further confirmed that the fine acicular strontium carbonate powder had a BET specific surface area of 98.0 m²/g.

Further, it was determined that a content of acicular particles having a length of a longer diameter in the range of 5 nm to 100 nm was 100%.

### [Example 4]

### (1) Preparation of fine acicular strontium carbonate powder

The procedures of Example 3 were repeated except that the compound C (Nymeen S-204) was replaced with the compound B (Kaosera 8110, available from Kao Corporation) in an amount of 56.64 g (28 weight parts per 100 weight parts of strontium carbonate particles), to produce a fine acicular strontium carbonate powder.

### (2) Measurements of particle size and BET specific surface area of fine acicular strontium carbonate powder

The particle size was determined in the manner described in Example 2. It was determined that an average length of longer diameter was 37 nm, an average aspect ratio was 2.3, acicular particles having a length of longer diameter of 150 nm or more were contained in a ratio of less than 0.1% (0/1,000) in terms of number of particles. It was further confirmed that the fine acicular strontium carbonate powder had a BET specific surface area of 98.0 m²/g.

Further, it was determined that a content of acicular particles having a length of a longer diameter in the range of 5 nm to 100 nm was 100%.

### [Reference Example 1]

### (1) Preparation of fine acicular strontium carbonate powder

The procedures of Example 3 were repeated except that the aqueous slurry containing acicular strontium carbonate particles was surface-treated with carrying out no aging step, to prepare a fine acicular strontium carbonate powder

### (2) Measurements of particle size and BET specific surface area of fine acicular strontium carbonate powder

The particle size was determined in the manner described in Example 2. It was determined that an average length of longer diameter was 18 nm, an average aspect ratio was 1.7, acicular particles having a length of longer diameter of 150 nm or more were contained in a ratio of less than 0.1% (0/1,000) in terms of number of particles. It was further confirmed that the fine acicular strontium carbonate powder had a BET specific surface area of 150.0 m²/g. The results are set forth in Table 3.

Comparison of the results obtained in Examples 2 to 4 and Reference Example 1, it was confirmed that the aging step is effective to appropriately minimize the average length of a longer diameter in the range of 5 to 100 nm, and increase the average aspect ratio to 2.0 or more (this means that there are an increased amount of narrow acicular particle).

**Table 3**

| Example | A | B | C | D | E |
|---|---|---|---|---|---|
| 2 | 80 | 24 | 64 | 2.7 | 74 |
| 3 | 95 | 12 | 32 | 2.3 | 98 |
| 4 | 95 | 12 | 37 | 2.3 | 98 |

| Referential Example 1 | | | | | |
|---|---|---|---|---|---|
| | - | - | 18 | 1.7 | 150 |

### Remarks:

A: aging temperature (°C)
B: aging period (hour)
C: average length of longer diameter (nm)
D: average aspect ratio
E: BET specific surface area (m²/g)

DL-tartaric acid was employed as crystal growth-restraining agent.

## Claims

1. A fine acicular strontium carbonate powder comprising acicular strontium carbonate particles having an average longer diameter of 150 nm or less and an average aspect ratio of 1.5 or more, and containing 5% or less of acicular particles having a longer diameter of 200 nm or more in terms of number of particles, which is **characterized in that** surfaces of the acicular strontium carbonate particles are treated with polycarboxylic acid having a side chain of a polyoxyalkylene group or an anhydride thereof which is named (A) and a compound having a hydrophilic group, a hydrophilic group and a group capable of forming an anion in water which is named (B).

2. The fine acicular strontium carbonate powder described in claim 1, in which the compound (B) is polyoxyalkylene alkylether carboxylic acid or a salt thereof.

3. The fine acicular strontium carbonate powder described in claim 1, in which the average aspect ratio is not less than 2.0 and not more than 5.0.

4. The fine acicular strontium carbonate powder described in claim 1, in which the average length of the longer diameter is 10 nm or more.

5. A process for producing the fine acicular strontium carbonate powder described in claim 1, which comprises the steps of:
preparing an aqueous slurry in which acicular strontium carbonate particles having an average longer diameter of 150 nm or less and an average aspect ratio of 1.5 or more, and containing 5% or less of acicular particles having a longer diameter of 200 nm or more in terms of number of particles dispersed in an aqueous medium;
mixing the aqueous slurry with polycarboxylic acid having a side chain of a polyoxyalkylene group or an anhydride thereof which is named (A), to give an aqueous slurry containing dispersed acicular strontium carbonate particles whose surface are treated with the polycarboxylic acid or anhydride thereof;
mixing the aqueous slurry containing dispersed acicular strontium carbonate particles whose surface are treated with the polycarboxylic acid or anhydride thereof with a compound having a hydrophilic group, a hydrophilic group and a group capable of forming an anion in water which is named (B), to give an aqueous slurry containing dispersed acicular strontium carbonate particles which are additionally treated with the compound; and
drying the aqueous slurry containing dispersed additionally treated acicular strontium carbonate particles.

6. The process for producing the fine acicular strontium carbonate powder described in claim 5, in which the compound (B) is polyoxyalkylene alkylether carboxylic acid or a salt thereof.

7. The process for producing the fine acicular strontium carbonate powder described in claim 5, in which the compound (B) to be mixed with the aqueous slurry is in an amount of 11 to 50 weight parts per 10 weight parts of the polycarboxylic acid or anhydride thereof named (A) which has been mixed with the aqueous slurry.

8. A fine acicular strontium carbonate powder comprising acicular strontium carbonate particles having an average longer diameter of 5 to 100 nm and an average aspect ratio of 2.0 or more, and containing 5% or less of acicular particles having a longer diameter of 150 nm or more in terms of number of particles, which is **characterized in that** surfaces of the acicular strontium carbonate particles are treated with polycarboxylic acid having a side chain of a polyoxyalkylene group or an anhydride thereof which is named (A) and a compound having a hydrophilic group, a hydrophilic group and a group capable of forming an anion in water which is named (B) or an amine having a polyoxyalkylene group and a hydrocarbyl group which is named (C).

9. The fine acicular strontium carbonate powder described in claim 8, in which the average aspect ratio is in the range of 2.0 to 20.

10. The fine acicular strontium carbonate powder described in claim 8, which has a BET specific surface area in the range of 50 to 150 m²/g.

11. A process for producing a fine strontium carbonate powder, which comprises:
a reaction step comprising reacting strontium hydroxide with carbon dioxide in the presence of a dicarboxylic acid having at least one hydroxyl group in a molecular thereof or an anhydride thereof, to prepare strontium carbonate particles, and
an aging step comprising heating the strontium carbonate particles prepared in the reaction step at a temperature in the range of 75 to 115°C.
